Europäisches Patentamt

European Patent Office

Office européen des brevets

(19)

(11) Veröffentlichungsnummer: **0 137 058
B1**

(12) **EUROPÄISCHE PATENTSCHRIFT**

(45) Veröffentlichungstag der Patentschrift:
**13.07.88**

(51) Int. Cl.⁴: **F 23 K 3/00,** B 65 G 47/72

(21) Anmeldenummer: **83110028.4**

(22) Anmeldetag: **07.10.83**

(54) **Vorrichtung zum Verteilen schüttfähiger bis viskoser Güter auf eine Mehrzahl von Verbraucherstellen.**

(43) Veröffentlichungstag der Anmeldung:
**17.04.85 Patentblatt 85/16**

(45) Bekanntmachung des Hinweises auf die Patenterteilung:
**13.07.88 Patentblatt 88/28**

(84) Benannte Vertragsstaaten:
**AT BE CH DE FR GB IT LI SE**

(56) Entgegenhaltungen:
**DE - A - 1 756 198
DE - A - 2 050 607
DE - C - 617 613
DE - C - 861 899**

(73) Patentinhaber: **Kalkwerke H. Oetelshofen GmbH & Co.,
Schöllerweg 68, D-5600 Wuppertal 11 (DE)**

(72) Erfinder: **Peil, Rüdiger, Am Höfchen 43,
D-5600 Wuppertal 11 (DE)**
Erfinder: **Horn, Hans-Günter, Rittergut Schöller,
D-5600 Wuppertal 11 (DE)**
Erfinder: **Schwirz, Hans-Joachim, Schöllerweg 53,
D-5600 Wuppertal 11 (DE)**

(74) Vertreter: **Gille, Christian, Dipl.-Ing. et al, Türk, Gille +
Hrabal Patentanwälte Bruckner Strasse 20,
D-4000 Düsseldorf 13 (DE)**

**Beschreibung**

Die Erfindung betrifft eine Vorrichtung zum Verteilen schüttfähiger bis viskoser Güter auf eine Mehrzahl von Verbraucherstellen mit den Merkmalen des ersten Teils der Patentansprüche 1 und 2.

Bei einer zum Verteilen von Schüttgütern bestimmten bekannten Vorrichtung dieser Gattung (DE-A-28 15 486) besteht der Verteiler aus einem gekrümmten Rohrstück, das auf einer anzutreibenden Welle angeordnet ist. Ein derartiger Verteiler lässt sich jedoch nicht preiswert mit der notwendigen hohen Präzision herstellen. Beim Drehen des Verteilers ergeben sich bedeutende Unwuchten, die Lagerungsprobleme bedingen. Ausserdem ist die vorbekannte Vorrichtung sehr sperrig, wartungsintensiv und insgesamt höchst kostspielig.

Bei einer weiteren bekannten Vorrichtung (DE-C-617 613) zum Verteilen eines Kohlenstaub-Luft-Gemisches über mehrere Zweigleitungen ist zwischen die Hauptleitung und die Zweigleitung ein Verbindungskanal geschaltet, der in einem trichterförmigen, mit der Spitze gleichachsig an die Hauptleitung angeschlossenen Gehäuse stetig umläuft, an das die Zweigleitungen an exzentrischen, um die Achse in gleichen Abständen verteilten Stellen angeschlossen sind und mit einer Abschlusskante für die jeweils nicht angeschlossenen Kanalmündungen versehen ist. Dieser Verbindungskanal ist durch eine Trennwand in einem trichterförmigen Hilfsgehäuse abgeteilt, das innerhalb des Hauptgehäuses umläuft und dessen Boden die Abschlussplatte für die Zweigkanalmündungen bildet. Durch die Verwendung einer derartigen Vorrichtung kommt es zu den gleichen unerwünschten Wirkungen wie bei der vorbeschriebenen Vorrichtung, d.h. eine derartige Vorrichtung lässt sich weder preiswert noch mit der notwendigen hohen Präzision herstellen. Beim Drehen des Verteilers ergeben sich auch hier bedeutende Unwuchten, die ebenfalls Lagerungsprobleme bedingen. Des weiteren ist die vorbekannte Vorrichtung aufgrund ihrer konstruktiven Ausgestaltung nicht in einer kompakten Bauweise zu erstellen und erweist sich als äusserst sperrig, wartungsintensiv und sowohl in der Herstellung als auch in der Montage als äusserst arbeits- und damit kostenintensiv. Bei dem Versuch die Vorrichtung zur Verteilung von Stoffen verschiedener Dichte und damit zur Verteilung von Stoffen unterschiedlichen spezifischen Gewichtes zu verwenden, kommt es zu einer erheblichen Verstärkung von Unwuchten, da bei einer eventuell vorgenommenen Auswuchtung lediglich das spezifische Gewicht eines der zu verteilenden Stoffe im vorliegenden Fall des Kohlenstaub-Luft-Gemisches Berücksichtigung finden konnte.

Der Erfindung liegt die Aufgabe zugrunde, eine Vorrichtung zum Verteilen schüttfähiger, beispielsweise pulver- oder staubförmiger, bis viskoser Güter auf eine Mehrzahl von Verbraucherstellen zu schaffen, die preiswert herzustellen ist, kompakt gebaut und deren drehbarer Verteiler weitgehend ausgewuchtet ist und dies sowohl bei der Verteilung schüttfähiger, beispielsweise pulver- oder staubförmiger als auch bei der Verteilung schüttfähiger bis viskoser Güter.

Diese Aufgabe wird bei einer Vorrichtung der eingangs genannten Gattung mit den Merkmalen des kennzeichnenden Teiles des Patentanspruches 1 und 2 gelöst. Eine vorteilhafte Ausgestaltung der Erfindung ist Gegenstand des Unteranspruches 3.

Dadurch, dass gemäss der Erfindung der Verteiler ein kegelstumpfförmiger voller Rotationskörper ist, der einen durchgehenden Kanal enthält, welcher von seiner Drehachse zu einer Seite am Kegelmantel verläuft ist es möglich, den Verteiler aus einem Stück bzw. einem Guss zu fertigen und so auf eine Vielzahl von Arbeitsschritten zu verzichten bzw. die Herstellung auf einfachste Art automatisieren zu können. Dadurch ist es weiterhin möglich, die Vorrichtung äusserst preiswert herzustellen und dies bei gleichzeitiger Erhöhung der Betriebssicherheit. Des weiteren wirkt sich die einstückige Ausgestaltung des Verteilers äusserst günstig auf dessen Grösse aus, d.h. er kann in kompakter Bauweise gefertigt werden, wodurch das ihn umgebende Gehäuse klein gehalten werden kann. Durch die zum einen geringe Grösse und durch das zum anderen relativ hohe Eigengewicht des Verteilers stellt die durch den Kanal entstehende Unwucht aufgrund ihres relativ geringen Volumens und des bei Betrieb in ihr befindlichen zu verteilenden Gutes eine zu vernachlässigende Grösse dar. Andererseits wirkt sich ein Wechsel des zu verteilenden Gutes nicht oder nur äusserst gering, aufgrund des relativ hohen Eigengewichtes des Verteilers, auf dessen Dreheigenschaften aus.

Ist der Verteiler ein kegelstumpfförmiger hohler Rotationskörper, der an einem Ende offen ist und in seiner Wand eine Auslassöffnung enthält, so ist bei dieser Ausführungsform aufgrund der Ausgestaltung des Verteilers ebenfalls eine einstückige Ausbildung möglich, wodurch sich wie im vorherigen Fall die Herstellungskosten, bei gleichzeitiger Erhöhung der Betriebssicherheit, auf ein Minimum reduzieren und eine relativ kleine und damit kompakte Bauweise ermöglichen lässt. Dadurch dass der Verteiler ein kegelstumpfförmiger hohler Rotationskörper ist, der an einem Ende offen ist und somit keinen Kanal aufweist, das offene Ende aber dem als Einlass dienenden Rohr zugewandt ist, befindet sich das zu verteilende Gut nicht exzentrisch zur Drehachse, sondern in einer koaxialen Ausrichtung. Die in der Wand befindliche Auslassöffnung verursacht aufgrund ihres geringen Volumens und des relativ hohen Eigengewichtes des Verteilers und des zentral angeordneten zu verteilenden Gutes keine nennenswerte Unwucht des Verteilers.

Durch die Ausbildung des Verteilers in Form einer flachen Scheibe mit einer ihn durchsetzenden Bohrung, ist auch hier eine einstückige Ausbildung des Verteilers und damit eine preiswerte Herstellung bei gleichzeitig hoher Betriebssicherheit und kompakter Bauweise möglich. Auch hier weist der Verteiler aufgrund seiner Ausgestaltung und einstückigen Bauweise kaum konstruktionsbedingte Unwuchten auf, wobei die Bohrung aufgrund ihres geringen Volumens und der Tatsache, dass sie bei Betrieb der Vorrichtung mit dem zu verteilenden Gut gefüllt ist, ebenfalls keine nennenswerte Unwucht verursacht.

Durch die kaum vorhandenen konstruktionsbedingten Unwuchten der Verteiler und der Ausgestaltung, kommt die Vorrichtung bzw. deren Gehäuse mit einem kleinen Durchmesser aus, so dass die Vorrichtung sehr kompakt ausgeführt werden kann.

Liegen die Auslassöffnungen im konischen Bereich des Gehäuses, so stellt dies eine besonders günstige und platzsparende Anordnung dieser Öffnungen dar, da entweder eine vermehrte Anzahl von Auslassöffnungen bei gleichbleibender Gehäusegrösse platziert werden kann oder aber bei gleichbleibender Anzahl der Auslassöffnungen das Gehäuse noch kompakter ausgestaltet werden kann.

Die erfindungsgemässe Vorrichtung ist beispielsweise zum Zuführen pulver- oder staubförmiger Braunkohle zu den Brennern eines Ringschachtofens bestimmt. Der Kohlenstaub wird kontinuierlich durch eine Speiseleitung zugeführt und entsprechend der Drehung des Verteilers pulsierend an die einzelnen Brenner weitergegeben, da der sich drehende Verteiler stets nur zeitweilig mit den einzelnen Auslassöffnungen und den daran angeschlossenen, zu den Brennern führenden Leitungen in Verbindung steht.

Bei konstanter Drehzahl des Verteilers und gleichen Durchmessern der Auslassleitungen wird das zugeführte Gut gleichmässig auf alle Verbraucherstellen verteilt.

Ist ein Ringschachtofen mit Brennern ausgestattet, die in zwei oder mehr Ebenen übereinander liegen, wird eine erfindungsgemässe Verteilvorrichtung für jede Brennerebene vorgesehen. Die Verteiler der Vorrichtungen werden dann zweckmässig in entgegengesetzter Drehrichtung angetrieben, wodurch die pulsierende Brennstoffzufuhr zu den einzelnen Brennern ausgeglichen werden kann.

Obwohl die erfindungsgemässe Vorrichtung bevorzugt für die Verteilung von Kohlenstaub bestimmt ist, ist sie auch zum Verteilen anderer pulver- oder staubförmiger Materialien sowie zum Verteilen viskoser Güter wie Fette, die beispielsweise von einer zentralen Quelle mehreren Schmierstellen zugeführt werden sollen, geeignet.

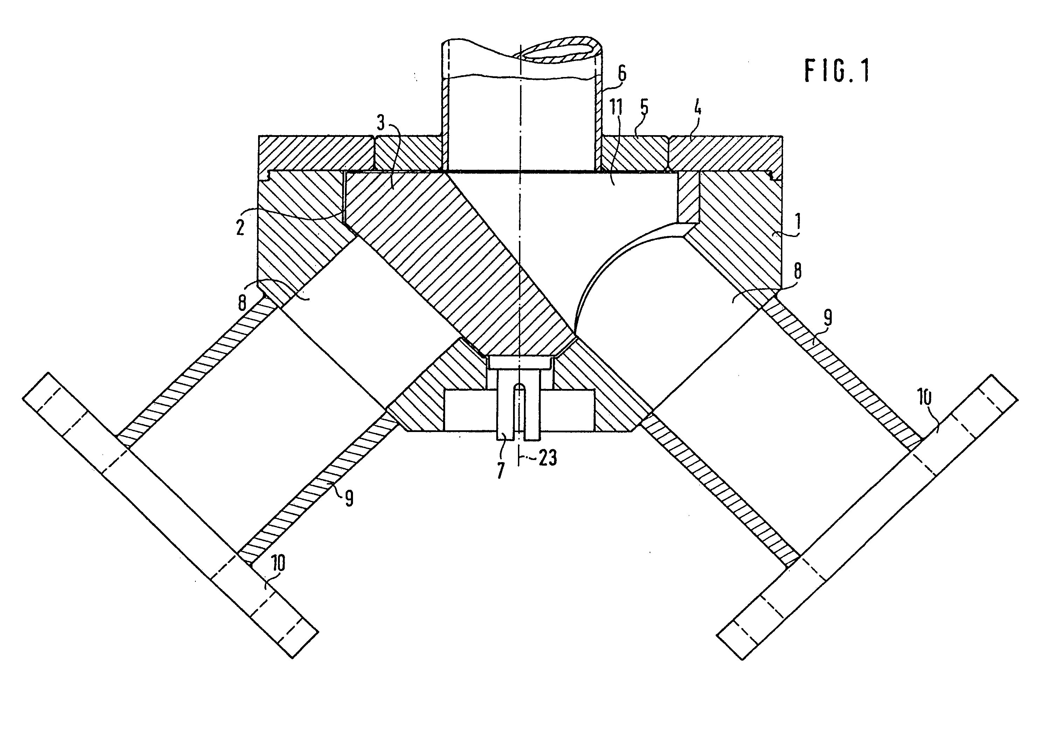

In der Zeichnung sind in den Figuren 1 bis 3 drei Ausführungsbeispiele der erfindungsgemässen Vorrichtung jeweils in einem senkrechten Schnitt dargestellt.

Die in Fig. 1 dargestellte Vorrichtung hat ein kompaktes Gehäuse 1, das einen etwa dreieckförmigen Hohlraum 2 enthält, in welchem ein diesen Hohlraum 2 nahezu ausfüllender Rotationskörper 3 drehbar gelagert ist. Das Gehäuse 1 hat einen ringförmigen Deckel 4, der auf das Gehäuse aufgeschraubt und in den ein Flansch 5 eines Rohres 6 eingeschweisst ist. Der Rotationskörper 3 ist auf einem zentralen Zapfen 7 angeordnet, der auf eine nicht dargestellte Antriebswelle aufgesteckt werden kann.

Das Gehäuse 1 enthält in einem konischen Bereich mehrere schräg nach unten verlaufende Bohrungen 8, die vorzugsweise auf seinen Umfang gleichmässig verteilt sind. Auf der Aussenseite des Gehäuses 1 ist vor jeder Bohrung 8 ein Rohrstutzen 9 angeschweisst, der am äusseren Ende einen Flansch 10 zum Anschliessen einer Abfuhrleitung enthält. Bei einer derartigen Bauweise lassen sich auf einer verhältnismässig kleinen Grundfläche möglichst viele Bohrungen 8 unterbringen, so dass das Gehäuse 1 sehr kompakt ausgebildet werden kann, d.h. der als Verteiler dienende Rotationskörper 3 muss keinen unnötig grossen Durchmesser aufweisen.

Im Rotationskörper 3 ist ein durchgehender Kanal 11 enthalten, der eine Verbindung von dem in der Drehachse des Rotationskörpers 3 angeordneten, als Einlass dienenden Rohr 6 zu den einzelnen Bohrungen 8 herstellt, je nachdem welche Winkellage der Rotationskörper 3 einnimmt. Der Kanal 11 ist so ausgebildet, dass er sich nach Möglichkeit nur in eine der Bohrungen 8 öffnet, damit das durch das Rohr 6 herangeführte Gut auf die einzelnen Bohrungen 8 gleichmässig abgegeben wird.

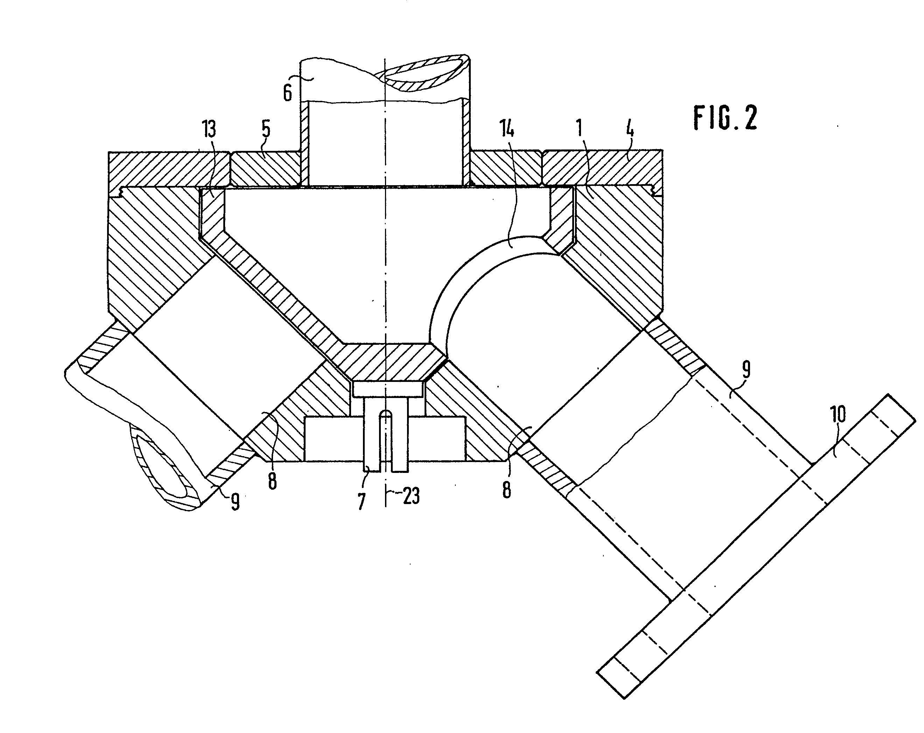

Die Ausführungsform gemäss Fig. 2 unterscheidet sich von der Ausführungsform aus Fig. 1 lediglich insofern, als der Rotationskörper 13 ein nach oben offener Hohlkörper ist, der in seiner kegelstumpfförmigen Mantelfläche eine Öffnung 14 enthält, die nacheinander mit den einzelnen Bohrungen 8 des kegelstumpfförmigen Gehäuses 1 in Verbindung treten kann, um das durch das Rohr 6 herangeführte Gut pulsierend an die einzelnen Rohrstutzen 9 weiterleiten zu können.

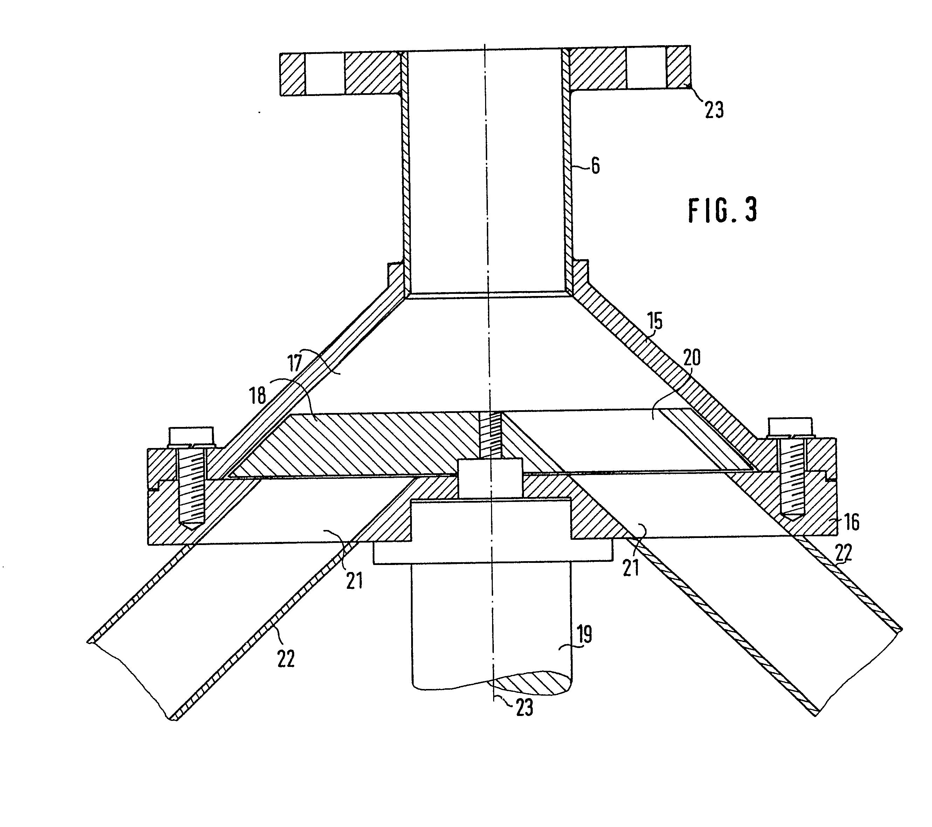

Das Ausführungsbeispiel gemäss Fig. 3 unterscheidet sich von den Ausführungsbeispielen aus Fig. 1 und 2 dadurch, dass das Gehäuse 15 als sich nach unten erweiternder Hohlkörper ausgebildet ist und mittels eines an der Unterseite angeschraubten Bodens 16 verschlossen wird. Im kegelstumpfförmigen Hohlraum 17 befindet sich eine diesen nur teilweise ausfüllende kegelstumpfförmige flache Scheibe 18, die auf einer anzutreibenden Welle 19 abgestützt ist und somit ebenso wie die Rotationskörper 3 und 13 von der Welle 19 um eine senkrechte Achse 23 gedreht werden kann. In der Scheibe 18 befindet sich exzentrisch eine schräg verlaufende Bohrung 20, die mit im Boden 16 befindlichen entsprechenden Bohrungen 21 nacheinander in Flucht gelangt, wenn die Scheibe 18 gedreht wird. An die Bohrungen 21 sind Rohrstutzen 22 angeschlossen, durch die das durch ein Rohr 6 herangeführte Gut zu den nicht dargestellten Verbraucherstellen weitergeleitet wird. Das Rohr 6 ist zentral in das obere Ende des Gehäuses 15 eingeschweisst und hat einen Stutzen 23 zum Anschliessen einer Speiseleitung.

Bei allen drei Ausführungsformen ist das Rohr 6 koaxial zur Drehachse 23 des Rotationskörpers 3, 13 bzw. 18 angeordnet.

## Patentansprüche

1. Vorrichtung zum Verteilen schüttfähiger bis viskoser Güter auf eine Mehrzahl von Verbraucherstellen, mit einem Gehäuse (1), welches einen im Querschnitt dreieckförmigen Innenraum (2) aufweist, das eine Einlassöffnung und für jede Verbraucherstelle je eine Auslassöffnung (8) enthält und in dem ein als Rotationskörper (3; 13) ausgebildeter den Innenraum des Gehäuses (1) wenigstens teilweise ausfüllender Verteiler (3; 13) auf einer antreibbaren Welle abgestützt ist, der einen Durchgang (11; 14) enthält, welcher ständig mit der Einlassöffnung und beim Drehen nacheinander mit den einzelnen über den Umfang des Gehäuses (1) verteilten Auslassöffnungen (8) in Verbindung steht, dadurch gekennzeichnet, dass der Verteiler ein kegelstumpfförmiger voller Rotationskörper (3) ist, der einen durchgehenden Kanal (11) enthält, welcher von seiner Drehachse (23) zu einer Seite am Kegelmantel verläuft,

oder dass der Verteiler ein kegelstumpfförmiger hohler Rotationskörper (13) ist, der an einem Ende offen ist und in seiner Wand eine Auslassöffnung (14) enthält.

2. Vorrichtung zum Verteilen schüttfähiger bis viskoser Güter auf eine Mehrzahl von Verbraucherstellen, mit einem Gehäuse (15), welches einen im Querschnitt dreieckförmigen Innenraum (17) aufweist, das eine Einlassöffnung und für jede Verbraucherstelle je eine Auslassöffnung (21) enthält und in dem ein als Rotationskörper (18) ausgebildeter den Innenraum des Gehäuses (15) wenigstens teilweise ausfüllender Verteiler (18) auf einer antreibbaren Welle (19) abgestützt ist, der einen Durchgang (20) enthält, welcher ständig mit der Einlassöffnung und beim Drehen nacheinander mit den einzelnen über den Umfang des Gehäuses (15) verteilten Auslassöffnungen (21) in Verbindung steht, dass der Verteiler eine flache Scheibe (18) mit einer ihn durchsetzenden Bohrung (20) ist.

3. Vorrichtung nach Anspruch 1, dadurch gekennzeichnet, dass die Auslassöffnung (8) im konischen Bereich des Gehäuses (1) liegt.

## Claims

1. Distributor of pourable or viscous goods to a plurality of consumers having a housing (1) comprising a triangular section internal chamber (2) having an inlet opening and an outlet opening (8) for each consumer, and in which a distributor designed as rotating body (3; 13) filling at least part of the internal chamber of housing (1) is supported on a drive shaft, said distributor comprising a passage (11; 14) continuously connected to said inlet opening and, during rotational movement, successively to each of outlet openings (8) distributed over the circumference of housing (1), characterized in that

said distributor is a solid rotating truncated cone (3) comprising a continuous channel (11) extending between rotational axis (23) and one side of the cone envelope,

or that said distributor is a hollow rotating truncated cone (13) open at one end, the wall of which is provided with an outlet opening (14).

2. Distributor of pourable or viscous goods to a plurality of consumers with a housing (15) comprising a triangular section internal chamber (17) having an inlet opening and an outlet opening (21) for each consumer, and in which a distributor designed as rotating body (18) filling at least part of the internal chamber of housing (15) is supported on a drive shaft (19), said distributor comprising a passage (20) continuously connected to said inlet opening and, during rotational movement, successively to each of outlet openings (8) distributed over the circumference of housing (15), characterized in that said distributor is a flat disk (18) provided with a passing bore (20).

3. Distributor as defined by claim 1, characterized in that outlet opening (8) is located in the conical area of housing (1).

## Revendications

1. Dispositif pour distribuer des marchandises en vrac ou visqueuses à plusieurs postes de consommation comportant un boîtier (1) comprenant une chambre interne (2) à section triangulaire pourvue d'une ouverture d'admission et, pour chacun des postes de consommation, une sortie (8), et dans lequel un distributeur sous forme de corps rotatif (3; 13) remplissant au moins partiellement la chambre interne du boîtier (1) est supporté par un arbre menant, ledit distributeur étant pourvu d'un passage (11; 14) continuellement en liaison avec ladite ouverture d'admission et, pendant le mouvement de rotation, successivement avec chacune des sorties (8) distribuées sur la circonférence du boîtier (1), caractérisé en ce que

ledit distributeur est un corps rotatif tronconique solide (3) comprenant un canal (11) s'étendant entre l'axe de rotation (23) et l'un des côtés de l'enveloppe conique,

ou que ledit distributeur est un corps rotatif tronconique creux (13) ouvert à l'une de ses extrémités et dont la paroi comprend une ouverture (14).

2. Dispositif pour distribuer des marchandises en vrac ou visqueuses à plusieurs postes de consommation comportant un boîtier (15) comprenant une chambre interne (17) à section triangulaire pourvue d'une ouverture d'admission et, pour chacun des postes de consommation, une sortie (21), et dans lequel un distributeur sous forme de corps rotatif (18) remplissant au moins partiellement la chambre interne du boîtier (15) est supporté par un arbre menant (19), ledit distributeur étant pourvu d'un passage (20) continuellement en liaison avec ladite ouverture d'admission et, pendant le mouvement de rotation, successivement avec chacune des sorties (21) distribuées sur la circonférence du boîtier (15), caractérisé en ce que ledit distributeur est un disque plat (18) comportant une ouverture traversante (20).

3. Dispositif selon la revendication 1, caractérisé en ce que la sortie (8) est localisée dans le domaine conique du boîtier (1).

FIG.1

FIG.2

FIG. 3

0 137 058